(19) Europäisches Patentamt
European Patent Office
Office européen des brevets

(11) **EP 4 443 212 A1**

(12) **EUROPEAN PATENT APPLICATION**
published in accordance with Art. 153(4) EPC

(43) Date of publication:
**09.10.2024 Bulletin 2024/41**

(21) Application number: **22898506.5**

(22) Date of filing: **18.11.2022**

(51) International Patent Classification (IPC):
*G02B 21/02* $^{(2006.01)}$     *G02B 21/00* $^{(2006.01)}$

(52) Cooperative Patent Classification (CPC):
**G02B 21/00; G02B 21/02**

(86) International application number:
**PCT/JP2022/042845**

(87) International publication number:
**WO 2023/095723 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2021 JP 2021193197**

(71) Applicant: **NIKON CORPORATION
Minato-ku
Tokyo 108-6290 (JP)**

(72) Inventor: **NONAKA, Azuna
Tokyo 108-6290 (JP)**

(74) Representative: **Viering, Jentschura & Partner
mbB
Patent- und Rechtsanwälte
Grillparzerstraße 14
81675 München (DE)**

(54) **MICROSCOPE OBJECTIVE LENS, MICROSCOPE OPTICAL SYSTEM, AND MICROSCOPE DEVICE**

(57) A microscope objective lens (OL) comprises a first lens group (G1) having positive refractive power, a second lens group (G2) having negative refractive power, and a third lens group (G3) having positive refractive power, the third lens group (G3) having a cemented lens (CL31) including a positive lens and a negative lens. The microscope objective lens satisfies the following conditional expression. $0.1 < tg/LA < 0.4$ $-35 < vd3P-vd3N < 0$ where tg is the total sum of center thicknesses of lenses of the microscope objective lens (OL), LA is the distance on the optical axis from a lens surface closest to the object side to a lens surface closest to the image side of the microscope objective lens (OL), vd3P is the Abbe's number of the positive lens of the cemented lens (CL31), and vd3N is the Abbe's number of the negative lens of the cemented lens (CL31).

*FIG.1*

EP 4 443 212 A1

**Description**

TECHNICAL FIELD

The present invention relates to a microscope objective lens, a microscope optical system, and a microscope apparatus.

TECHNICAL BACKGROUND

In recent years, a variety of wide-field and low-power objective lenses for microscopes have been proposed (see, for example, Patent literature 1). Such an objective lens is requested to have various aberrations such as curvature of field favorably corrected.

PRIOR ARTS LIST

PATENT DOCUMENT

Patent literature 1: Japanese Laid-Open Patent Publication No. H8-313814(A)

SUMMARY OF THE INVENTION

A microscope objective lens according to the present invention consists of a first lens group having positive refractive power, a second lens group having negative refractive power, and a third lens group having positive refractive power, the first lens group, the second lens group, and the third lens group being arranged along an optical axis in order from an object, in which the first lens group condenses a light flux from the object, the second lens group diverges a light flux from the first lens group, the third lens group includes a cemented lens and makes a divergent light flux from the second lens group a parallel light flux, the cemented lens including a positive lens and a negative lens, and the following conditional expressions are satisfied,

$$0.1 < tg/LA < 0.4$$

$$-35 < vd3P - vd3N < 0$$

where

tg: a total sum of center thicknesses of lenses in the microscope objective lens,
LA: distance on the optical axis from a lens surface of the microscope objective lens that is closest to the object to a lens surface that is closest to an image,
vd3P: an Abbe number of the positive lens in the cemented lens of the third lens group, and
vd3N: an Abbe number of the negative lens in the cemented lens of the third lens group.

A microscope optical system according to the present invention comprises: the microscope objective lens described above; and a second objective lens configured to condense light from the microscope objective lens.

A microscope apparatus according to the present invention comprises the microscope objective lens described above.

BRIEF DESCRIPTION OF THE DRAWINGS

FIG. 1 is a cross-sectional view illustrating a configuration of a microscope objective lens according to a first example;
FIG. 2 is a diagram of various aberrations of the microscope objective lens according to the first example;
FIG. 3 is a cross-sectional view illustrating a configuration of a microscope objective lens according to a second example;
FIG. 4 is a diagram of various aberrations of the microscope objective lens according to the second example;
FIG. 5 is a cross-sectional view illustrating a configuration of a microscope objective lens according to a third example;

FIG. 6 is a diagram of various aberrations of the microscope objective lens according to the third example;

FIG. 7 is a cross-sectional view illustrating a configuration of a second objective lens; and

FIG. 8 is a schematic configuration diagram illustrating a confocal fluorescence microscope that is an example of a microscope apparatus.

DESCRIPTION OF THE EMBODIMENTS

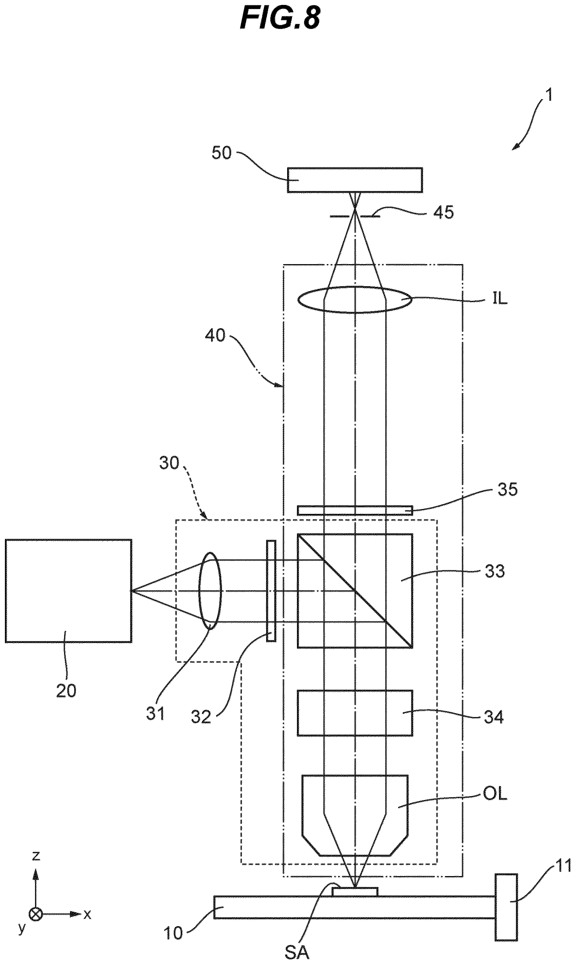

The following describes a preferred embodiment according to the present invention. First, a microscope optical system and a confocal fluorescence microscope (microscope apparatus) each comprising a microscope objective lens according to the present embodiment will be described on the basis of FIG. 8. As illustrated in FIG. 8, a confocal fluorescence microscope 1 includes a stage 10, a light source 20, an illumination optical system 30, a microscope optical system 40, and a detection unit 50. In the following description, a coordinate axis extending in the optical axis direction of the microscope objective lens of the confocal fluorescence microscope 1 will be referred to as a z axis. In addition, respective coordinate axes extending in directions orthogonal to each other in a plane vertical to this z axis will be referred to as an x axis and a y axis.

For example, a sample SA held between a slide glass (not illustrated) and a cover glass (not illustrated) is placed on the stage 10. In addition, the sample SA stored in a sample container (not illustrated) along with immersion liquid may be placed on the stage 10. The sample SA includes a fluorescent substance such as a fluorescent dye. The sample SA is, for example, a cell or the like fluorescently stained in advance. A stage driving unit 11 is provided near the stage 10. The stage driving unit 11 moves the stage 10 along the z axis.

The light source 20 generates excitation light having a predetermined wavelength band. For example, a laser light source or the like capable of emitting laser light (excitation light) having the predetermined wavelength band is used as the light source 20. The predetermined wavelength band is set to a wavelength band in which it is possible to excite the sample SA including a fluorescent substance. Excitation light emitted from the light source 20 enters the illumination optical system 30.

The illumination optical system 30 illuminates the sample SA on the stage 10 with the excitation light emitted from the light source 20. The illumination optical system 30 comprises a collimator lens 31, a beam splitter 33, and a scanner 34 in order from the light source 20 to the sample SA. In addition, the illumination optical system 30 includes a microscope objective lens OL of the microscope optical system 40. The collimator lens 31 makes the excitation light emitted from the light source 20 parallel light.

The beam splitter 33 has characteristics of reflecting excitation light from the light source 20 and transmitting fluorescence from the sample SA. The beam splitter 33 reflects the excitation light from the light source 20 toward the sample SA on the stage 10. The beam splitter 33 transmits the fluorescence generated by the sample SA toward the detection unit 50. An excitation filter 32 that transmits the excitation light from the light source 20 is disposed between the beam splitter 33 and the collimator lens 31. A fluorescence filter 35 that transmits the fluorescence from the sample SA is disposed between the beam splitter 33 and a second objective lens IL of the microscope optical system 40.

The scanner 34 scans the sample SA with excitation light from the light source 20 in the two directions of the x direction and the y direction. For example, a galvanometer scanner, a resonant scanner, or the like is used as the scanner 34.

The microscope optical system 40 condenses fluorescence generated by the sample SA. The microscope optical system 40 comprises the microscope objective lens OL and the second objective lens IL in order from the sample SA to the detection unit 50. In addition, the microscope optical system 40 includes the scanner 34 and the beam splitter 33 disposed between the microscope objective lens OL and the second objective lens IL. The microscope objective lens OL is disposed to be opposed to the space above the stage 10 on which the sample SA is placed. The microscope objective lens OL condenses excitation light from the light source 20 and irradiates the sample SA on the stage 10 with the excitation light. In addition, the microscope objective lens OL receives the fluorescence generated by the sample SA and makes the fluorescence parallel light. The second objective lens IL condenses the fluorescence (parallel light) from the microscope objective lens OL.

The detection unit 50 detects the fluorescence generated by the sample SA through the microscope optical system 40. For example, a photomultiplier tube is used as the detection unit 50. A pinhole 45 is provided between the microscope optical system 40 and the detection unit 50. The pinhole 45 is disposed at the position conjugate to the focal position of the microscope objective lens OL closer to the sample SA. The pinhole 45 allows for the passage of only light from the focal plane (the plane that extends through the focal position of the microscope objective lens OL and is vertical to the optical axis of the microscope objective lens OL) of the microscope objective lens OL or a plane deviated from the focal plane in the optical axis direction within a predetermined acceptable deviation range and blocks the other light.

In the confocal fluorescence microscope 1 configured as described above, excitation light emitted from the light source 20 is transmitted by the collimator lens 31 and made parallel light. The excitation light transmitted by the collimator lens 31 passes through the excitation filter 32 to enter the beam splitter 33. The excitation light entering the beam splitter 33 is reflected by the beam splitter 33 to enter the scanner 34. The scanner 34 scans the sample SA with the excitation light entering the scanner 34 in the two directions of the x direction and the y direction. The excitation light entering the scanner 34 passes through the scanner 34 and is transmitted by the microscope objective lens OL to be condensed on the focal plane of the microscope objective lens OL. A portion of the sample SA on which the excitation light is condensed (i.e., a portion overlapping with the focal plane of the microscope objective lens OL) is two-dimensionally scanned by the scanner 34 in the two directions of the x direction and the y direction. This causes the illumination optical system 30 to illuminate the sample SA on the stage 10 with the excitation light emitted from the light source 20.

The fluorescent substance included in the sample SA is irradiated with the excitation light to be excited and emit fluorescence. The fluorescence from the sample SA is transmitted by the microscope objective lens OL and made parallel light. The fluorescence transmitted by the microscope objective lens OL passes through the scanner 34 to enter the beam splitter 33. The fluorescence entering the beam splitter 33 is transmitted by the beam splitter 33 to reach the fluorescence filter 35. The fluorescence reaching the fluorescence filter 35 passes through the fluorescence filter 35 and is transmitted by the second objective lens IL to be condensed at the position conjugate to the focal position of the microscope objective lens OL. The fluorescence condensed at the position conjugate to the focal position of the microscope objective lens OL passes through the pinhole 45 to enter the detection unit 50.

The detection unit 50 photoelectrically converts the light (fluorescence) entering the detection unit 50 to generate data corresponding to the amount (brightness) of the light as an optical detection signal. The detection unit 50 outputs the generated data to an unillustrated control unit. It is to be noted that the control unit uses pieces of data received from the detection unit 50 as pieces of data each for one pixel and performs processing of arranging them in synchronization with two-dimensional scanning by the scanner 34, thereby generating one piece of image data in which pieces of data for a plurality of pixels are arranged two-dimensionally (in the two directions). In this way, it is possible for the control unit to acquire an image of the sample SA.

The confocal fluorescence microscope 1 has been described as an example of the microscope apparatus according to the present embodiment, but this is not limitative. For example, the microscope apparatus according to the present embodiment may be an observation microscope for making a bright-field observation, a fluorescence observation, or the like, a confocal microscope, a multiphoton excitation microscope, a super-resolution microscope, or the like. In addition, the confocal fluorescence microscope 1 may be an upright microscope or an inverted microscope.

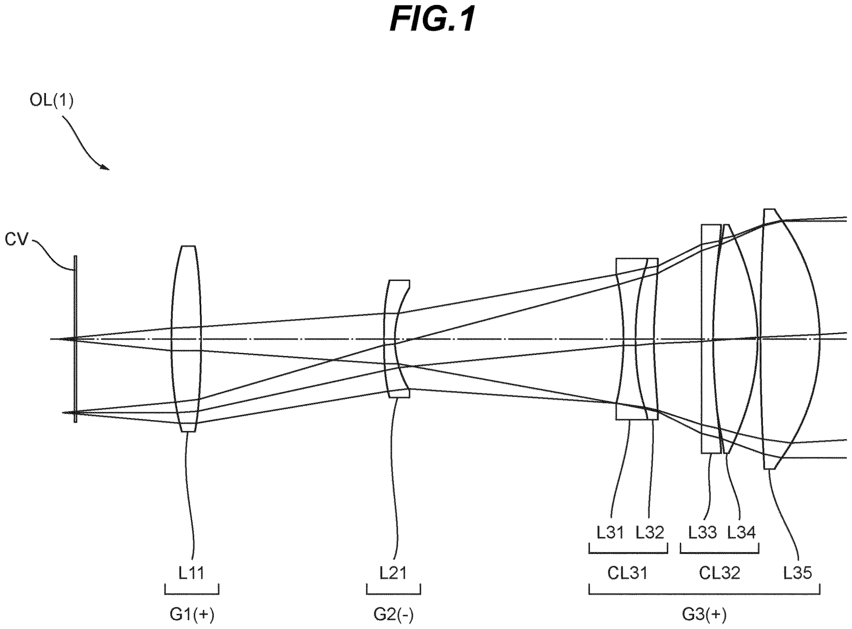

Next, the microscope objective lens according to the present embodiment will be described. As an example of the microscope objective lens OL according to the present embodiment, a microscope objective lens OL(1) illustrated in FIG. 1 comprises a first lens group G1 having positive refractive power, a second lens group G2 having negative refractive power, and a third lens group G3 having positive refractive power that are arranged along the optical axis in order from an object. The first lens group G1 condenses a light flux from the object. The second lens group G2 diverges a light flux from the first lens group G1. The third lens group G3 includes a cemented lens including a positive lens and a negative lens and makes a divergent light flux from the second lens group G2 a parallel light flux. In the present embodiment, the first lens group G1 condensing a light flux from the object means that the first lens group G1 has a light condensing effect. For example, when a divergent light flux from the object is transmitted by the first lens group G1, a light flux from the first lens group G1 is sometimes made a divergent light flux whose degree of divergence is decreased by the first lens group G1.

In the configuration described above, the microscope objective lens OL according to the present embodiment satisfies the following conditional expression (1) and conditional expression (2).

$$0.1 < tg/LA < 0.4 \ ... \ (1)$$

$$-35 < vd3P - vd3N < 0 \ ... \ (2)$$

where

tg: the total sum of the center thicknesses of the lenses in the microscope objective lens OL,
LA: the distance on the optical axis from the lens surface of the microscope objective lens OL that is the closest to an object to the lens surface of the microscope objective lens OL that is the closest to an image,
vd3P: the Abbe number of a positive lens in a cemented lens of the third lens group G3, and
vd3N: the Abbe number of a negative lens in a cemented lens of the third lens group G3.

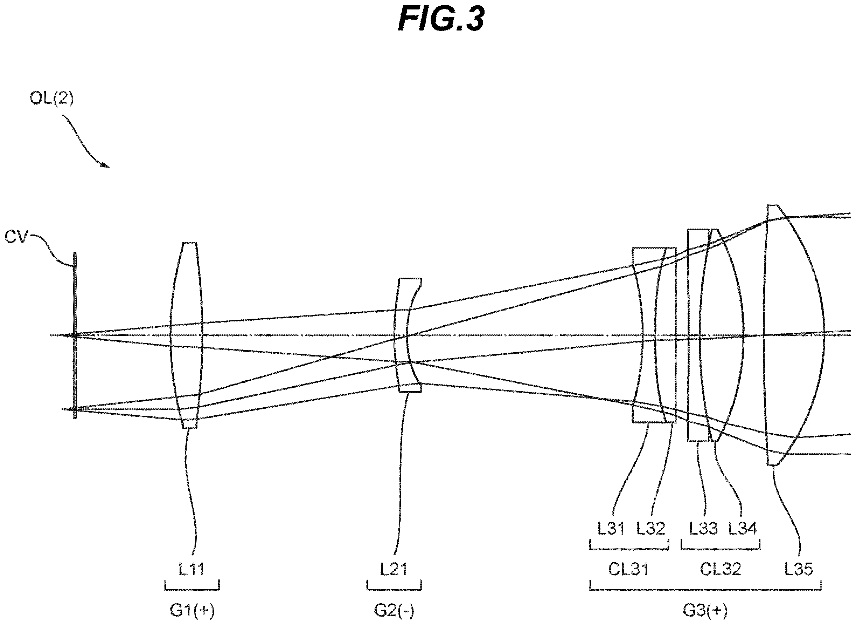

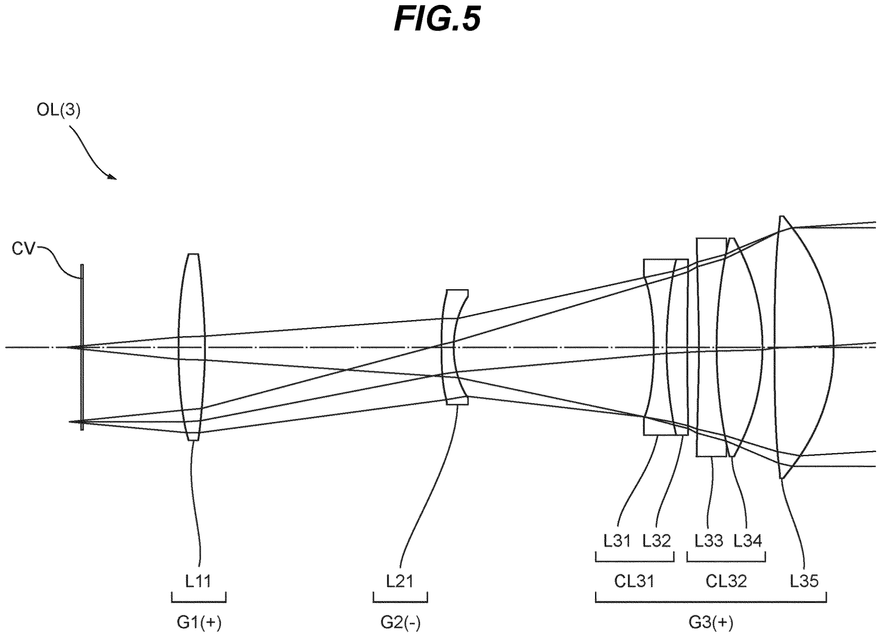

According to the present embodiment, it is possible to obtain a microscope objective lens that is an apochromat having curvature of field favorably corrected, and a microscope optical system and a microscope apparatus each comprising this microscope objective lens. The microscope objective lens OL according to the present embodiment may be a microscope objective lens OL(2) illustrated in FIG. 3 or a microscope objective lens OL(3) illustrated in FIG. 5.

The conditional expression (1) defines an appropriate relationship between the total sum of the center thicknesses of the lenses in the microscope objective lens OL and the distance on the optical axis from the lens surface of the microscope objective lens OL that is the closest to an object to the lens surface of the microscope objective lens OL that is the closest to an image. It is to be noted that the center thickness of a lens is the distance on the optical axis from the lens surface of the lens closer to the object to the lens surface of the lens closer to the image.

Incidentally, since a thicker lens causes an off-axis light ray to have greater optical path length than that of an on-axis light ray and the off-axis light ray has relatively lower refractive power, an off-axis image formation position tends to deviate backward and the image surface tends to be corrected excessively. Additionally, a thicker lens tends to have a greater difference in curvature between the meridional plane and the sagittal plane on the lens surface of the lens closer to an image and furthermore the difference in optical path length between the on-axis light ray and the off-axis light ray causes a difference in refractive power, which tends to deviate the off-axis image formation position more. In addition, since a low-power microscope objective lens has greater focal length as a whole than that of a high-power microscope objective lens, the Petzval sum is excessively corrected by relatively negative refractive power, the refractive power becomes insufficient for the image surface, in particular, the sagittal image surface, and the off-axis image formation position tends to deviate backward.

An effect of facilitating the off-axis image formation position to be disposed further forward by decreasing the total sum of the center thicknesses of the lenses in the microscope objective lens OL, an effect of facilitating the meridional image surface and the sagittal image surface to coincide with each other, and an effect of eliminating a concave surface having an excessively high curvature, that is, a diverging surface by facilitating a lens surface to decrease in curvature as a whole to alleviate the excessive correction of the Petzval sum are thus obtained. This allows the total sum of the center thicknesses of the lenses in the microscope objective lens OL to be decreased by satisfying the conditional expression (1), and it is thus possible to alleviate the excessive correction of the Petzval sum and favorably correct the curvature of field.

When the corresponding value of the conditional expression (1) exceeds an upper limit value, the total sum of the center thicknesses of the lenses in the microscope objective lens OL increases, and the Petzval sum is thus corrected excessively and it is difficult to favorably correct the curvature of field. Setting the upper limit value of the conditional expression (1) to 0.38 and furthermore 0.35 makes it possible to make the effects of the present embodiment more certain.

When the corresponding value of the conditional expression (1) falls below a lower limit value, the total sum of the center thicknesses of the lenses in the microscope objective lens OL decreases too much and it is thus difficult to dispose a lens necessary to correct chromatic aberration including a secondary spectrum. Setting the lower limit value of the conditional expression (1) to 0.2, 0.25, and furthermore 0.27 makes it possible to make the effects of the present embodiment more certain.

The conditional expression (2) defines an appropriate relationship between the Abbe number of a positive lens in a cemented lens of the third lens group G3 and the Abbe number of a negative lens in the cemented lens of the third lens group G3. Satisfying the conditional expression (2) makes it possible to favorably correct the secondary spectrum in the correction of longitudinal chromatic aberration in addition to primary achromatization.

When the corresponding value of the conditional expression (2) exceeds an upper limit value, it is difficult to sufficiently correct the secondary spectrum of the longitudinal chromatic aberration. Setting the upper limit value of the conditional expression (2) to -5, -7, and furthermore -10 makes it possible to make the effects of the present embodiment more certain.

When the corresponding value of the conditional expression (2) falls below a lower limit value, the secondary spectrum of the longitudinal chromatic aberration is corrected excessively and it is difficult to favorably correct the longitudinal chromatic aberration. Setting the lower limit value of the conditional expression (2) to -30 and furthermore -25 makes it possible to make the effects of the present embodiment more certain.

It is preferable that the first lens group G1 consists of one lens in the microscope objective lens OL according to the present embodiment. This decreases the first lens group G1 in length and it is thus possible to decrease the total sum of the center thicknesses of the lenses in the microscope objective lens OL. It is therefore possible to favorably correct the curvature of field by using the effects described above.

It is preferable that the second lens group G2 consists of one lens in the microscope objective lens OL according to the present embodiment. This decreases the second lens group G2 in length and it is thus possible to decrease the total sum of the center thicknesses of the lenses in the microscope objective lens OL. It is therefore possible to favorably correct the curvature of field by using the effects described above.

It is to be noted that the microscope objective lens OL according to the present embodiment may be configured in a manner in which the first lens group G1 consists of one lens and the second lens group G2 consists of one lens. The microscope objective lens OL according to the present embodiment may be configured in a manner in which one of the distance between the first lens group G1 and the second lens group G2 and the distance between the second lens group G2 and the third lens group G3 is the greatest lens distance (air distance) in the microscope objective lens OL and the other is the second greatest lens distance (air distance) in the microscope objective lens OL.

It is preferable that the second lens group G2 consists of a meniscus lens having a convex surface facing an object in the microscope objective lens OL according to the present embodiment. This decreases the second lens group G2 in length and it is thus possible to decrease the total sum of the center thicknesses of the lenses in the microscope objective lens OL. It is therefore possible to favorably correct the curvature of field by using the effects described above.

It is preferable that a cemented lens of the third lens group G3 consists of a positive lens and a negative lens in the microscope objective lens OL according to the present embodiment. It is preferable that the cemented lens of the third lens group G3 be disposed the closest to an object in the third lens group G3 in the microscope objective lens OL according to the present embodiment.

It is preferable that the microscope objective lens OL according to the present embodiment satisfies the following conditional expression (3).

$$0.1 < t3/LA < 0.4 \ldots (3)$$

where t3: the distance on the optical axis from the lens surface of the third lens group G3 that is the closest to an object to the lens surface of the third lens group G3 that is the closest to an image.

The conditional expression (3) defines an appropriate relationship between the distance on the optical axis from the lens surface of the third lens group G3 that is the closest to an object to the lens surface of the third lens group G3 that is the closest to an image and the distance on the optical axis from the lens surface of the microscope objective lens OL that is the closest to the object to the lens surface of the microscope objective lens OL that is the closest to the image. The third lens group G3 is decreased in length by satisfying the conditional expression (3) and it is thus possible to decrease the total sum of the center thicknesses of the lenses in the microscope objective lens OL. It is therefore possible to favorably correct the curvature of field by using the effects described above.

When the corresponding value of the conditional expression (3) exceeds an upper limit value, the third lens group G3 increases in length and the total sum of the center thicknesses of the lenses in the microscope objective lens OL increases. This prevents the curvature of the diverging surface of a lens from decreasing and causes the correction of the Petzval sum to tend to be excessive, which makes it difficult to favorably correct the curvature of field. Setting the upper limit value of the conditional expression (3) to 0.38 and furthermore 0.35 makes it possible to make the effects of the present embodiment more certain.

When the corresponding value of the conditional expression (3) falls below a lower limit value, the third lens group G3 decreases in length too much and the total sum of the center thicknesses of the lenses in the microscope objective lens OL decreases too much. This makes it difficult to dispose a lens necessary to correct chromatic aberration including a secondary spectrum. Setting the lower limit value of the conditional expression (3) to 0.2, 0.25, and furthermore 0.27 makes it possible to make the effects of the present embodiment more certain.

It is preferable that the microscope objective lens OL according to the present embodiment satisfies the following conditional expression (4).

$$0.1 < (Rc2 + Rc1)/(Rc2 - Rc1) < 1 \ldots (4)$$

where

Rc1: the radius of curvature of the lens surface that is the closest to an object in a cemented lens of the third lens group G3, and
Rc2: the radius of curvature of the lens surface that is the closest to an image in the cemented lens of the third lens group G3.

The conditional expression (4) defines an appropriate range for a shape factor of the cemented lens of the third lens group G3. Satisfying the conditional expression (4) makes it possible to decrease the third lens group G3 in length and decrease the curvature of the diverging surface of a lens in the third lens group G3, which makes it possible to decrease the total sum of the center thicknesses of the lenses in the microscope objective lens OL. It is therefore possible to alleviate the excessive correction of the Petzval sum as described above and favorably correct the curvature of field.

When the corresponding value of the conditional expression (4) exceeds an upper limit value, it is difficult to decrease the third lens group G3 in length and the total sum of the center thicknesses of the lenses in the microscope objective lens OL increases. This prevents the curvature of the diverging surface of a lens in the third lens group G3 from decreasing and causes the correction of the Petzval sum to be excessive, which makes it difficult to favorably correct the curvature of field. Setting the upper limit value of the conditional expression (4) to 0.95 and furthermore 0.9 makes it possible to make the effects of the present embodiment more certain.

When the corresponding value of the conditional expression (4) falls below a lower limit value, it is difficult to decrease the third lens group G3 in length and the total sum of the center thicknesses of the lenses in the microscope objective lens OL increases. This prevents the curvature of the diverging surface of a lens in the third lens group G3 from decreasing and causes the correction of the Petzval sum to be excessive, which makes it difficult to favorably correct the curvature of field. Setting the lower limit value of the conditional expression (4) to 0.15 and furthermore 0.2 makes it possible to make the effects of the present embodiment more certain.

It is preferable that the microscope objective lens OL according to the present embodiment satisfies the following conditional expression (5).

$$0.03 < tc/LA < 0.08 \ ... \ (5)$$

where tc: the distance on the optical axis from the lens surface that is the closest to an object in a cemented lens of the third lens group G3 to the lens surface that is the closest to an image in the cemented lens of the third lens group G3.

The conditional expression (5) defines an appropriate relationship between the distance on the optical axis from the lens surface that is the closest to an object in a cemented lens of the third lens group G3 to the lens surface that is the closest to an image in the cemented lens of the third lens group G3 and the distance on the optical axis from the lens surface of the microscope objective lens OL that is the closest to the object to the lens surface of the microscope objective lens OL that is the closest to the image. The cemented lens of the third lens group G3 is decreased in thickness by satisfying the conditional expression (5) and it is thus possible to decrease the total sum of the center thicknesses of the lenses in the microscope objective lens OL. It is therefore possible to favorably correct the curvature of field by using the effects described above.

When the corresponding value of the conditional expression (5) exceeds an upper limit value, the cemented lens of the third lens group G3 increases in thickness and the total sum of the center thicknesses of the lenses in the microscope objective lens OL increases. This prevents the curvature of the diverging surface of a lens from decreasing and causes the correction of the Petzval sum to tend to be excessive, which makes it difficult to favorably correct the curvature of field. Setting the upper limit value of the conditional expression (5) to 0.07 and furthermore 0.06 makes it possible to make the effects of the present embodiment more certain.

When the corresponding value of the conditional expression (5) falls below a lower limit value, the cemented lens of the third lens group G3 decreases too much in thickness and it is difficult to dispose a lens necessary to correct chromatic aberration including a secondary spectrum. Setting the lower limit value of the conditional expression (5) to 0.035 and furthermore 0.04 makes it possible to make the effects of the present embodiment more certain.

It is preferable that the microscope objective lens OL according to the present embodiment satisfies the following conditional expression (6).

$$0.6 < \theta gF3P < 0.7 \ ... \ (6)$$

where $\theta gF3P$: the partial dispersion ratio of a positive lens in a cemented lens of the third lens group G3 that is defined, when the refractive index of the positive lens with respect to the g-line is denoted by ng3P, the refractive index of the positive lens with respect to the F-line is denoted by nF3P, and the refractive index of the positive lens with respect to the C-line is denoted by nC3P, by the following expression,

$$\theta gF3P = (ng3P - nF3P)/(nF3P - nC3P)$$

The conditional expression (6) defines an appropriate range for the partial dispersion ratio of the positive lens in the cemented lens of the third lens group G3. Satisfying the conditional expression (6) makes it possible to favorably correct the secondary spectrum in the correction of longitudinal chromatic aberration in addition to primary achromatization.

When the corresponding value of the conditional expression (6) exceeds an upper limit value, the secondary spectrum of the longitudinal chromatic aberration is corrected excessively and it is difficult to favorably correct the longitudinal chromatic aberration. Setting the upper limit value of the conditional expression (6) to 0.68 and furthermore 0.65 makes it possible to make the effects of the present embodiment more certain.

When the corresponding value of the conditional expression (6) falls below a lower limit value, it is difficult to sufficiently correct the secondary spectrum of the longitudinal chromatic aberration. Setting the lower limit value of the conditional expression (6) to 0.61 and furthermore 0.62 makes it possible to make the effects of the present embodiment more certain.

It is preferable that the microscope objective lens OL according to the present embodiment satisfies the following conditional expression (7) and conditional expression (8).

$$0.02 < \theta gF3P - (0.645 - 0.0017 \times \nu d3P) < 0.12 \ldots (7)$$

$$20 < \nu d3P < 35 \ldots (8)$$

where $\theta$gF3P: the partial dispersion ratio of a positive lens in a cemented lens of the third lens group G3 that is defined, when the refractive index of the positive lens with respect to the g-line is denoted by ng3P, the refractive index of the positive lens with respect to the F-line is denoted by nF3P, and the refractive index of the positive lens with respect to the C-line is denoted by nC3P, by the following expression,

$$\theta gF3P = (ng3P - nF3P)/(nF3P - nC3P)$$

The conditional expression (7) defines an appropriate relationship between the partial dispersion ratio of a positive lens in a cemented lens of the third lens group G3 and the Abbe number of the positive lens in the cemented lens of the third lens group G3. The conditional expression (8) defines an appropriate range for the Abbe number of the positive lens in the cemented lens of the third lens group G3. Satisfying the conditional expression (7) and the conditional expression (8) makes it possible to favorably correct the secondary spectrum in the correction of longitudinal chromatic aberration in addition to primary achromatization.

When the corresponding value of the conditional expression (7) exceeds an upper limit value, the secondary spectrum of the longitudinal chromatic aberration is corrected excessively and it is difficult to favorably correct the longitudinal chromatic aberration. Setting the upper limit value of the conditional expression (7) to 0.1 and furthermore 0.08 makes it possible to make the effects of the present embodiment more certain.

When the corresponding value of the conditional expression (7) falls below a lower limit value, it is difficult to sufficiently correct the secondary spectrum of the longitudinal chromatic aberration. Setting the lower limit value of the conditional expression (7) to 0.021 and furthermore 0.022 makes it possible to make the effects of the present embodiment more certain.

When the corresponding value of the conditional expression (8) exceeds an upper limit value, it is difficult to sufficiently correct the secondary spectrum of the longitudinal chromatic aberration. Setting the upper limit value of the conditional expression (8) to 33 and furthermore 30 makes it possible to make the effects of the present embodiment more certain.

When the corresponding value of the conditional expression (8) falls below a lower limit value, the secondary spectrum of the longitudinal chromatic aberration is corrected excessively and it is difficult to favorably correct the longitudinal chromatic aberration. Setting the lower limit value of the conditional expression (8) to 21 and furthermore 22 makes it possible to make the effects of the present embodiment more certain.

It is preferable that the microscope objective lens OL according to the present embodiment satisfies the following conditional expression (9).

$$0.75 < f/LA < 2.2 \ldots (9)$$

where f: the focal length of the microscope objective lens OL.

The conditional expression (9) defines an appropriate relationship between the focal length of the microscope objective lens OL and the distance on the optical axis from the lens surface of the microscope objective lens OL that is the closest to an object to the lens surface of the microscope objective lens OL that is the closest to an image. It is preferable because a low-power microscope objective lens is obtained by satisfying the conditional expression (9). Setting the upper limit value of the conditional expression (9) to 2.1 and furthermore 2 makes it possible to make the effects of the present embodiment more certain. Setting the lower limit value of the conditional expression (9) to 0.85 and furthermore 0.95 makes it possible to make the effects of the present embodiment more certain.

Examples

The following describes examples of the microscope objective lens OL according to the present embodiment on the basis of the drawings. FIGS. 1, 3, and 5 are ray diagrams illustrating configurations of the microscope objective lenses OL {OL(1) to OL(3)} according to first to third examples. In each of FIGS. 1, 3, and 5, each of the lens groups is denoted by a combination of a sign G and a numeral (or an alphabet) and each of the lenses is denoted by a combination of a sign L and a numeral (or an alphabet) . In this case, the lenses and the like are denoted by using combinations of signs and numerals independently in the respective examples to prevent complication brought about by increasing the types and numbers of signs and numerals. The use of the combinations of signs and numerals that are the same in the respective examples does not therefore means the same configurations.

The following shows Tables 1 to 3 and, among these, Table 1 is a table indicating the specification data in the first example, Table 2 is a table indicating the specification data in the second example, and Table 3 is a table indicating the specification data in the third example. In each of the examples, the d-line (wavelength $\lambda$ = 587.6 nm), the C-line (wavelength $\lambda$ = 656.3 nm), the F-line (wavelength $\lambda$ = 486.1 nm), and the g-line (wavelength $\lambda$ = 435.8 nm) are selected as targets at which aberration characteristics are calculated.

In the table of [General Data], f denotes the focal length of the microscope objective lens. $\beta$ denotes the power of the microscope objective lens. NA denotes the numerical aperture of the microscope objective lens. WD denotes the operating distance (working distance) of the microscope objective lens. LA denotes the distance on the optical axis from the lens surface of the microscope objective lens that is the closest to an object to the lens surface of the microscope objective lens that is the closest to an image. tg denotes the total sum of the center thicknesses of the lenses in the microscope objective lens. t3 denotes the distance on the optical axis from the lens surface of the third lens group that is the closest to the object to the lens surface of the third lens group that is the closest to the image. tc denotes the distance on the optical axis from the lens surface that is the closest to the object in a cemented lens of the third lens group that is disposed the closest to the object to the lens surface that is the closest to the image in the cemented lens of the third lens group that is disposed the closest to the object.

In the table of [Lens Data], the surface numbers indicate the order of the lens surfaces from an object, R denotes the radius of curvature (a positive value in the case of a convex lens surface facing the object) corresponding to each of the surface numbers, D denotes the thickness of a lens on the optical axis corresponding to each surface number or air distance, nd denotes the refractive index of an optical material corresponding to each surface number with respect to the d-line (wavelength $\lambda$ = 587.6 nm), vd denotes the Abbe number of the optical material corresponding to each surface number based on the d-line, and $\theta$gF denotes the partial dispersion ratio of a material of an optical member corresponding to each surface number. "∞" of the radius of curvature denotes a flat surface or an aperture. In addition, the description of the refractive index nd of air = 1.00000 is omitted.

The refractive index of the material of the optical member with respect to the g-line (wavelength $\lambda$ = 435.8 nm) is denoted by ng, the refractive index of the material of the optical member with respect to the F-line (wavelength $\lambda$ = 486.1 nm) is denoted by nF, and the refractive index of the material of the optical member with respect to the C-line (wavelength $\lambda$ = 656.3 nm) is denoted by nC. The partial dispersion ratio $\theta$gF of the material of the optical member is then defined by the following expression (A).

$$\theta gF = (ng - nF)/(nF - nC) \ \ldots \ (A)$$

The table of [Lens Group Data] shows the first surface (the surface that is the closest to an object) of each lens group and the focal length.

The following uses "mm" in general for the described focal length f, radius of curvature R, surface distance D, other length, and the like as all the specification values unless otherwise noted, but this is not limitative because it is possible to obtain the equivalent optical performance even if the optical system is proportionally increased or decreased in size.

The description of the tables made so far is common to all the examples and the following omits duplicate description.

(First Example)

The first example will be described by using FIGS. 1 to 2 and Table 1. FIG. 1 is a ray diagram illustrating a configuration of a microscope objective lens according to the first example. The microscope objective lens OL(1) according to the first example comprises the first lens group G1 having positive refractive power, the second lens group G2 having negative refractive power, and the third lens group G3 having positive refractive power that are arranged along the optical axis in order from an object. The space between the tip portion of the microscope objective lens OL(1) according to the first example and a cover glass CV that covers an object is filled with air. It is to be noted that the refractive index of the cover glass CV with respect to the d-line (wavelength λ = 587.6 nm) is set to 1.52216.

The first lens group G1 condenses a light flux from an object. In addition, the first lens group G1 collects an off-axis light ray from the object further toward the optical axis. The first lens group G1 comprises a biconvex positive lens L11.

The second lens group G2 diverges a light flux from the first lens group G1. The second lens group G2 comprises a negative meniscus lens 21 having a convex surface facing an object.

The third lens group G3 makes a divergent light flux from the second lens group G2 a parallel light flux. The third lens group G3 comprises a first cemented lens CL31 obtained by cementing a biconcave negative lens L31 and a positive meniscus lens L32 having a convex surface facing an object, a second cemented lens CL32 obtained by cementing a biconcave negative lens L33 and a biconvex positive lens L34, and a biconvex positive lens L35 that are arranged along the optical axis in order from the object.

Table 1 below shows the values of the specifications of the microscope objective lens according to the first example.

(Table 1)

[General Data]

| | |
|---|---|
| f=100 | β=2times |
| NA=0.1 | WD=9.09 |
| LA=55.140 | tg=16.063 |
| t3=16.670 | tc=2.646 |

[Lens Data]

| Surface Number | R | D | nd | νd | θg |
|---|---|---|---|---|---|
| 1 | ∞ | 0.170 | 1.52216 | 58.80 | |
| 2 | ∞ | 9.090 | | | |
| 3 | 31.936 | 2.661 | 1.67300 | 38.26 | |
| 4 | -53.740 | 15.409 | | | |
| 5 | 23.922 | 1.000 | 1.65160 | 58.62 | |
| 6 | 8.657 | 19.399 | | | |
| 7 | -26.025 | 1.000 | 1.78800 | 47.35 | |
| 8 | 22.327 | 1.646 | 1.66382 | 27.35 | 0.6319 |
| 9 | 76.703 | 3.971 | | | |
| 10 | -796.845 | 1.000 | 1.83400 | 37.18 | |
| 11 | 55.780 | 3.730 | 1.43425 | 94.77 | |
| 12 | -20.552 | 0.298 | | | |
| 13 | 187.183 | 5.026 | 1.45600 | 91.37 | |
| 14 | -17.298 | - | | | |

[Lens Group Data]

| Group | First surface | Focal length |
|---|---|---|
| G1 | 3 | 30.14 |
| G2 | 5 | -21.37 |
| G3 | 7 | 59.39 |

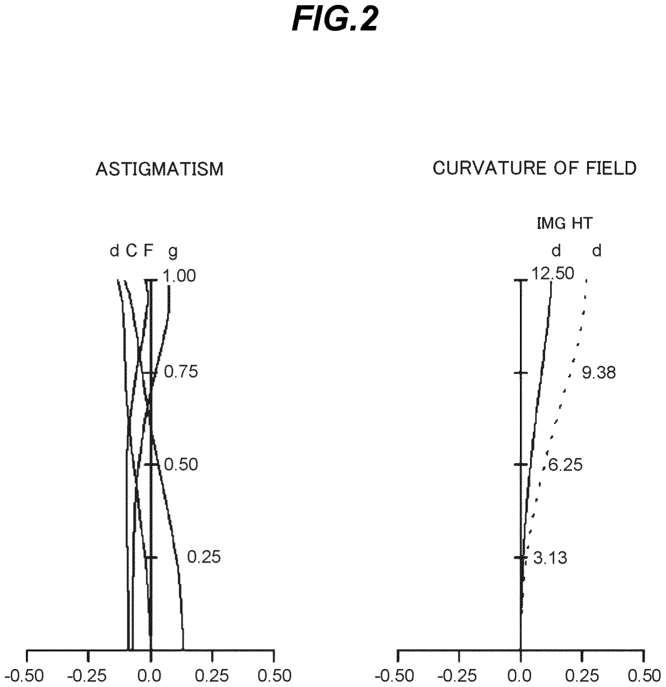

FIG. 2 is a diagram illustrating various aberrations (the spherical aberration and the curvature of field) of the microscope objective lens according to the first example. It is to be noted that the diagrams of the respective aberrations illustrate the various aberrations with the second objective lens combined with the microscope objective lens. In the diagrams of the respective aberrations in FIG. 2, d denotes the various aberrations with respect to the d-line (wavelength $\lambda$ = 587.6 nm), C denotes the various aberrations with respect to the C-line (wavelength $\lambda$ = 656.3 nm), F denotes the various aberrations with respect to the F-line (wavelength $\lambda$ = 486.1 nm), and g denotes the various aberrations with respect to the g-line (wavelength $\lambda$ = 435.8 nm). In the diagram of the spherical aberration, the longitudinal axis indicates a value obtained by standardizing the maximum value of an entrance pupil radius as 1 and the transverse axis indicates the value [mm] of aberration in each light ray. In the diagram of aberration illustrating the curvature of field, the solid line indicates a meridional image surface for each wavelength and the dashed line indicates a sagittal image surface for each wavelength. In addition, in the diagram of aberration illustrating the curvature of field, the longitudinal axis indicates image height [mm] and the transverse axis indicates the value [mm] of aberration. It is to be noted that signs similar to those of this example will be used in the diagrams of the aberrations of each of the following examples and duplicate description will be omitted.

The diagrams of the respective aberrations show that the microscope objective lens according to the first example has the various aberrations favorably corrected and has excellent image formation performance.

(Second Example)

The second example will be described by using FIGS. 3 to 4 and Table 2. FIG. 3 is a ray diagram illustrating a configuration of a microscope objective lens according to the second example. The microscope objective lens OL(2) according to the second example comprises the first lens group G1 having positive refractive power, the second lens group G2 having negative refractive power, and the third lens group G3 having positive refractive power that are arranged along the optical axis in order from an object. The space between the tip portion of the microscope objective lens OL(2) according to the second example and the cover glass CV that covers an object is filled with air. It is to be noted that the refractive index of the cover glass CV with respect to the d-line (wavelength $\lambda$ = 587.6 nm) is set to 1.52216. The respective lens groups G1 to G3 in the second example are configured as in the first example and are thus denoted by the same signs as those of the first example, omitting the detailed description of these respective lenses.

Table 2 below shows the values of the specifications of the microscope objective lens according to the second example.

(Table 2)

[General Data]

| f=100 | $\beta$=2times |
|---|---|
| NA=0.1 | WD=9.00 |
| LA=55.140 | tg=16.173 |
| t3=15.348 | tc=2.732 |

[Lens Data]

| Surface Number | R | D | nd | $\nu$d | $\theta$gF |
|---|---|---|---|---|---|
| 1 | $\infty$ | 0.170 | 1.52216 | 58.80 | |
| 2 | $\infty$ | 9.000 | | | |
| 3 | 28.627 | 2.648 | 1.67300 | 38.26 | |
| 4 | -68.866 | 16.273 | | | |
| 5 | 32.926 | 1.000 | 1.59319 | 67.90 | |
| 6 | 8.439 | 19.871 | | | |
| 7 | -22.962 | 1.000 | 1.84000 | 46.60 | |
| 8 | 29.089 | 1.732 | 1.66382 | 27.35 | 0.6319 |
| 9 | 256.408 | 1.110 | | | |
| 10 | -512.897 | 1.000 | 1.83400 | 37.18 | |
| 11 | 41.887 | 3.687 | 1.43254 | 94.77 | |
| 12 | -19.058 | 1.713 | | | |
| 13 | 181.077 | 5.106 | 1.49782 | 82.57 | |
| 14 | -17.032 | - | | | |

[Lens Group Data]

| Group | First surface | Focal length |
|-------|---------------|--------------|
| G1 | 3 | 30.38 |
| G2 | 5 | -19.43 |
| G3 | 7 | 54.90 |

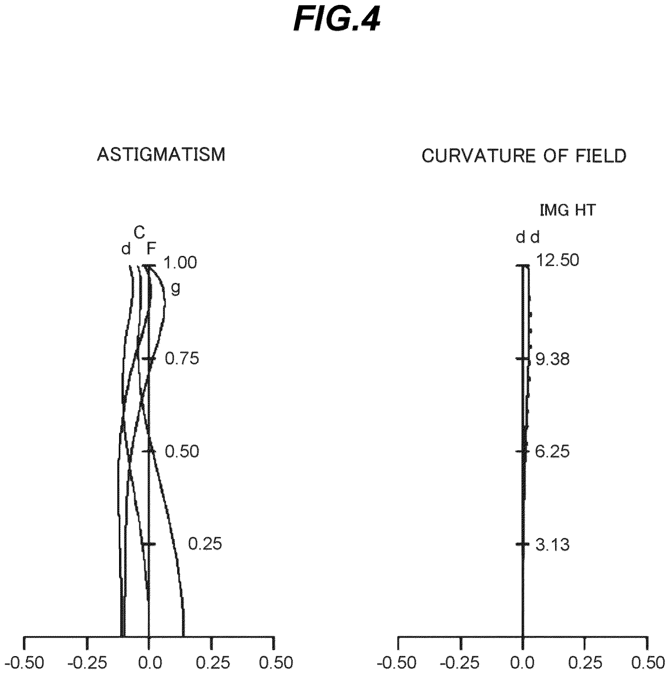

FIG. 4 is a diagram illustrating various aberrations (the spherical aberration and the curvature of field) of the microscope objective lens according to the second example. The diagrams of the respective aberrations show that the microscope objective lens according to the second example has the various aberrations favorably corrected and has excellent image formation performance.

(Third Example)

The third example will be described by using FIGS. 5 to 6 and Table 3. FIG. 5 is a ray diagram illustrating a configuration of a microscope objective lens according to the third example. The microscope objective lens OL(3) according to the third example comprises the first lens group G1 having positive refractive power, the second lens group G2 having negative refractive power, and the third lens group G3 having positive refractive power that are arranged along the optical axis in order from an object. The space between the tip portion of the microscope objective lens OL(3) according to the third example and the cover glass CV that covers an object is filled with air. It is to be noted that the refractive index of the cover glass CV with respect to the d-line (wavelength $\lambda$ = 587.6 nm) is set to 1.52216. The respective lens groups G1 to G3 in the third example are configured as in the first example and are thus denoted by the same signs as those of the first example, omitting the detailed description of these respective lenses.

Table 3 below shows the values of the specifications of the microscope objective lens according to the third example.

(Table 3)

[General Data]

| | |
|-----------|-------------|
| f=100 | β=2times |
| NA=0.1 | WD=8.98 |
| LA=55.050 | tg=16.271 |
| t3=15.034 | tc=2.701 |

[Lens Data]

| Surface Number | R | D | nd | νd | θgF |
|----------------|--------|--------|---------|-------|--------|
| 1 | ∞ | 0.170 | 1.52216 | 58.80 | |
| 2 | ∞ | 8.980 | | | |
| 3 | 37.069 | 2.237 | 1.67300 | 38.26 | |
| 4 | -55.854 | 19.889 | | | |
| 5 | 28.258 | 1.000 | 1.59319 | 67.90 | |
| 6 | 8.247 | 16.889 | | | |
| 7 | -21.999 | 1.000 | 1.83481 | 42.73 | |
| 8 | 31.725 | 1.701 | 1.80809 | 22.74 | 0.6288 |
| 9 | 345.459 | 1.000 | | | |
| 10 | -195.290 | 1.503 | 1.83400 | 37.18 | |
| 11 | 39.045 | 3.877 | 1.43254 | 94.77 | |
| 12 | -18.469 | 1.000 | | | |
| 13 | 158.897 | 4.953 | 1.49782 | 82.57 | |
| 14 | -16.263 | - | | | |

[Lens Group Data]

| Group | First surface | Focal length |
|-------|---------------|--------------|
| G1 | 3 | 33.43 |
| G2 | 5 | -20.00 |
| G3 | 7 | 59.96 |

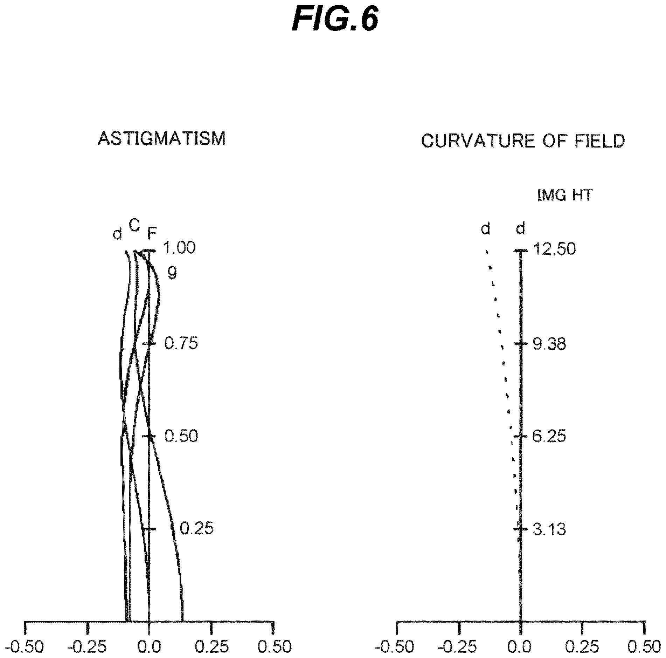

FIG. 6 is a diagram illustrating various aberrations (the spherical aberration and the curvature of field) of the microscope objective lens according to the third example. The diagrams of the respective aberrations show that the microscope objective lens according to the third example has the various aberrations favorably corrected and has excellent image formation performance.

The microscope objective lens according to each example is an infinity-corrected lens and is thus used in combination with the second objective lens that condenses light from the microscope objective lens. An example of the second objective lens that is

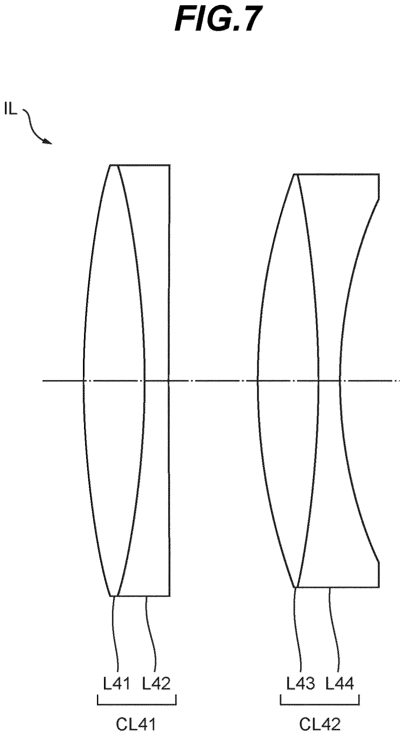

[Lens Group Data] used in combination with the microscope objective lens will be then described by using FIG. 7 and Table 4. FIG. 7 is a cross-sectional view illustrating a configuration of the second objective lens that is used in combination with the microscope objective lens according to each example. The diagrams of the various aberrations of the microscope objective lens according to each example are diagrams in each of which the microscope objective lens is used in combination with this second objective lens. The second objective lens IL illustrated in FIG. 7 comprises a first cemented lens CL41 obtained by cementing a biconvex positive lens L41 and a biconcave negative lens L42 and a second cemented lens CL42 obtained by cementing a biconvex positive lens L43 and a biconcave negative lens L44 that are arranged along the optical axis in order from an object.

Table 4 below shows the values of the specifications of the second objective lens. It is to be noted that the surface numbers, R, D, nd, and vd in the table of [Lens Data] are the same as those shown in the description of Tables 1 to 3 above.

(Table 4)

[Lens Data]

| Surface Number | R | D | nd | vd |
|----------------|----------|-------|---------|-------|
| 1 | 75.043 | 5.100 | 1.62280 | 57.03 |
| 2 | -75.043 | 2.000 | 1.74950 | 35.19 |
| 3 | 1600.580 | 7.500 | | |
| 4 | 50.256 | 5.100 | 1.66755 | 41.96 |
| 5 | -84.541 | 1.800 | 1.61266 | 44.40 |
| 6 | 36.911 | - | | |

Next, the table of [Conditional Expression Corresponding Value] will be described below. This table collectively shows the values corresponding to the respective conditional expressions (1) to (9) for all the examples (first to third examples).

Conditional Expression(1)    $0.1 < tg/LA < 0.4$

Conditional Expression(2)    $-35 < vd3P - vd3N < 0$

Conditional Expression(3)    $0.1 < t3/LA < 0.4$

Conditional Expression(4)    $0.1 < (Rc2 + Rc1)/(Rc2 - Rc1) < 1$

$$\text{Conditional Expression(5)} \quad 0.03 < tc/LA < 0.08$$

$$\text{Conditional Expression(6)} \quad 0.6 < \theta gF3P < 0.7$$

$$\text{Conditional Expression(7)} \quad 0.02 < \theta gF3P - (0.645 - 0.0017 \times \nu d3P) < 0.12$$

$$\text{Conditional Expression(8)} \quad 20 < \nu d3P < 35$$

$$\text{Conditional Expression(9)} \quad 0.75 < f/LA < 2.2$$

[Conditional Expression Corresponding Value]

| Conditional Expression | First example | Second example | Third example |
|:---:|:---:|:---:|:---:|
| (1) | 0.29 | 0.29 | 0.30 |
| (2) | -20.00 | -19.25 | -19.99 |
| (3) | 0.30 | 0.28 | 0.27 |
| (4) | 0.49 | 0.84 | 0.88 |
| (5) | 0.048 | 0.049 | 0.049 |
| (6) | 0.6319 | 0.6319 | 0.6288 |
| (7) | 0.0334 | 0.0334 | 0.0226 |
| (8) | 27.35 | 27.35 | 22.74 |
| (9) | 1.8136 | 1.8136 | 1.8165 |

According to each of the examples, it is possible to achieve the microscope objective lens that is an apochromat having curvature of field favorably corrected.

Here, each of the examples described above shows a specific example of the present embodiment and the present embodiment is not limited to these.

EXPLANATION OF NUMERALS AND CHARACTERS

G1 first lens group
G2 second lens group
G3 third lens group

**Claims**

1. A microscope objective lens essentially consisting of

a first lens group having positive refractive power, a second lens group having negative refractive power, and a third lens group having positive refractive power, the first lens group, the second lens group, and the third lens group being arranged along an optical axis in order from an object, wherein
the first lens group condenses a light flux from the object,
the second lens group diverges a light flux from the first lens group,
the third lens group includes a cemented lens and makes a divergent light flux from the second lens group a parallel light flux, the cemented lens including a positive lens and a negative lens, and
the following conditional expressions are satisfied,

$$0.1 < tg/LA < 0.4$$

$$-35 < \nu d3P - \nu d3N < 0$$

where

tg: a total sum of center thicknesses of lenses in the microscope objective lens,
LA: distance on the optical axis from a lens surface of the microscope objective lens that is closest to the object to a lens surface of the microscope objective lens that is closest to an image,
$\nu d3P$: an Abbe number of the positive lens in the cemented lens of the third lens group, and
$\nu d3N$: an Abbe number of the negative lens in the cemented lens of the third lens group.

2. The microscope objective lens according to Claim 1, wherein the first lens group consists of one lens.

3. The microscope objective lens according to Claim 1 or 2, wherein the second lens group consists of one lens.

4. The microscope objective lens according to any one of Claims 1 to 3, wherein the second lens group consists of a meniscus lens having a convex surface facing the object.

5. The microscope objective lens according to any one of Claims 1 to 4, wherein the cemented lens of the third lens group consists of the positive lens and the negative lens.

6. The microscope objective lens according to any one of Claims 1 to 5, wherein the cemented lens of the third lens group is disposed closest to the object in the third lens group.

7. The microscope objective lens according to Claim 6, wherein the following conditional expression is satisfied,

$$0.1 < t3/LA < 0.4$$

where t3: distance on the optical axis from a lens surface of the third lens group that is closest to the object to a lens surface of the third lens group that is closest to the image.

8. The microscope objective lens according to Claim 6 or 7, wherein the following conditional expression is satisfied,

$$0.1 < (Rc2 + Rc1)/(Rc2 - Rc1) < 1$$

where

Rc1: a radius of curvature of a lens surface that is closest to the object in the cemented lens of the third lens group, and
Rc2: a radius of curvature of a lens surface that is closest to the image in the cemented lens of the third lens group.

9. The microscope objective lens according to any one of Claims 6 to 8, wherein the following conditional expression is satisfied,

$$0.03 < tc/LA < 0.08$$

where tc: distance on the optical axis from a lens surface that is closest to the object in the cemented lens of the third lens group to a lens surface that is closest to the image in the cemented lens of the third lens group.

10. The microscope objective lens according to any one of Claims 6 to 9, wherein the following conditional expression is satisfied,

$$0.6 < \theta gF3P < 0.7$$

where $\theta gF3P$: a partial dispersion ratio of the positive lens in the cemented lens of the third lens group, the partial dispersion ratio being defined, when a refractive index of the positive lens with respect to a g-line is denoted by ng3P, a refractive index of the positive lens with respect to an F-line is denoted by nF3P, and a refractive index of the positive lens with respect to a C-line is denoted by nC3P, by the following expression,

$$\theta gF3P = (ng3P - nF3P)/(nF3P - nC3P).$$

11. The microscope objective lens according to any one of Claims 6 to 10, wherein the following conditional expression is satisfied,

$$0.02 < \theta gF3P - (0.645 - 0.0017 \times vd3P) < 0.12$$

$$20 < vd3P < 35$$

where $\theta gF3P$: a partial dispersion ratio of the positive lens in the cemented lens of the third lens group, the partial dispersion ratio being defined, when a refractive index of the positive lens with respect to a g-line is denoted by ng3P, a refractive index of the positive lens with respect to an F-line is denoted by nF3P, and a refractive index of the positive lens with respect to a C-line is denoted by nC3P, by the following expression,

$$\theta gF3P = (ng3P - nF3P)/(nF3P - nC3P).$$

12. The microscope objective lens according to any one of Claims 1 to 11, wherein the following conditional expression is satisfied,

$$0.75 < f/LA < 2.2$$

where f: focal length of the microscope objective lens.

13. A microscope optical system comprising:

the microscope objective lens according to any one of Claims 1 to 12; and
a second objective lens configured to condense light from the microscope objective lens.

14. A microscope apparatus comprising
the microscope objective lens according to any one of Claims 1 to 12.

*FIG.1*

# FIG.2

ASTIGMATISM

CURVATURE OF FIELD

# FIG.3

OL(2)

CV

L11
G1(+)

L21
G2(-)

L31 L32    L33 L34
CL31    CL32    L35
G3(+)

EP 4 443 212 A1

# FIG.4

ASTIGMATISM

CURVATURE OF FIELD

FIG.5

# FIG.6

ASTIGMATISM

CURVATURE OF FIELD

# FIG.7

IL

L41 L42   L43 L44
CL41      CL42

## FIG.8

## INTERNATIONAL SEARCH REPORT

International application No.

**PCT/JP2022/042845**

### A.    CLASSIFICATION OF SUBJECT MATTER

*G02B 21/02*(2006.01)i; *G02B 21/00*(2006.01)i
FI:    G02B21/02 A; G02B21/00

According to International Patent Classification (IPC) or to both national classification and IPC

### B.    FIELDS SEARCHED

Minimum documentation searched (classification system followed by classification symbols)

G02B21/02; G02B21/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | JP 8-313814 A (OLYMPUS OPTICAL CO LTD) 29 November 1996 (1996-11-29)<br>entire text, all drawings | 1-14 |
| A | JP 9-230249 A (NIKON CORP) 05 September 1997 (1997-09-05)<br>entire text, all drawings | 1-14 |
| A | JP 11-344667 A (NIKON CORP) 12 December 1999 (1999-12-12)<br>entire text, all drawings | 1-14 |
| A | JP 2019-191274 A (OLYMPUS CORP) 31 October 2019 (2019-10-31)<br>entire text, all drawings | 1-14 |
| A | JP 7-84188 A (NIKON CORP) 31 March 1995 (1995-03-31)<br>entire text, all drawings | 1-14 |
| A | CN 113219642 A (MOTIC CHINA GROUP CO LTD) 06 August 2021 (2021-08-06)<br>entire text, all drawings | 1-14 |

☐ Further documents are listed in the continuation of Box C.        ☑ See patent family annex.

| | |
|---|---|
| \*    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **13 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| | International application No. |
| --- | --- |
| | **PCT/JP2022/042845** |

| Patent document cited in search report | | | Publication date (day/month/year) | Patent family member(s) | | | Publication date (day/month/year) |
| --- | --- | --- | --- | --- | --- | --- | --- |
| JP | 8-313814 | A | 29 November 1996 | (Family: none) | | | |
| JP | 9-230249 | A | 05 September 1997 | (Family: none) | | | |
| JP | 11-344667 | A | 12 December 1999 | (Family: none) | | | |
| JP | 2019-191274 | A | 31 October 2019 | US entire text, all drawings US | 2019/0324259 11016281 | A1 B2 | |
| JP | 7-84188 | A | 31 March 1995 | US entire text, all drawings | 5532879 | A | |
| CN | 113219642 | A | 06 August 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8313814 A